# EUROPEAN PATENT APPLICATION

(11) **EP 2 735 965 A2**
(43) Date of publication of application: **28.05.2014**
(21) Application number: 13193061.2
(22) Date of filing: 15.11.2013
(51) Int. Cl.: G06F 9/44

(54) **Resume method and information processing device**

(30) Priority: 22.11.2012 JP 2012256551
(71) Applicant: Mitsubishi Electric Corporation, Chiyoda-ku Tokyo 100-8310 (JP)
(72) Inventor: Koike, Masahide, Tokyo, 100-8310 (JP); Maruyama, Kiyoyasu, Tokyo, 100-8310 (JP)
(74) Representative: HOFFMANN EITLE

(57) **Abstract**

To enable an information processing device to start quickly, a comparatively small second program runtime image (EM2) is loaded (ST12). The second program runtime image (EM2) then performs an initial process (ST13) and, in parallel, loads a comparatively large first program runtime image (EM1) (ST14), after which processing by the first program runtime image (EM1) begins (ST15). The first program (PG1) and the second program (PG2) share an initial processing area list (AL).

## Description

### BACKGROUND OF THE INVENTION

### 1. Field of the Invention

This invention relates to a resume method and an information processing device. The invention relates in particular to fast startup by use of a resume function, and in particular to a resume method suitable when the size of the runtime image of a program to be resumed is large and it takes a long time to transfer the runtime image from storage to program execution memory. The invention also relates to an information processing device that implements the method.

### 2. Description of the Related Art

In personal computers (PCs), set top boxes (STBs), mobile information devices, and other devices, there is an increasing need to provide a resume capability that enables the device to be quickly started up for use, but to maintain low power consumption while not in use. After the device has been started up, a suspension or hibernation process is carried out to save the post-startup state of the device in a memory such as a dynamic random access memory (DRAM) or a storage unit such as a hard disc drive (HDD) or solid state drive (SSD), after which device operation is halted and power consumption is reduced to a low level. If the post-startup state of the device is saved in a memory, power only needs to be supplied to that memory. If the post-startup state of the device is saved in a storage unit, power supply can be shut off completely except for limited functions such as the device's real time clock (RTC). Saving the post-startup state of the device in a memory will be referred to below as suspension processing. Saving the post-startup state of the device in a storage unit will be referred to as hibernation processing.

The resume process enables the device to start up quickly by reading its saved post-startup state from the memory or storage unit, thereby restoring the device to the state it was in before the suspension or hibernation process. A resume process performed after a suspension process may, for example, restore the central processing unit (CPU) register information, which has been saved in the memory. A resume process performed after a hibernation process may, for example, reload a saved runtime image of a program from the storage into a memory and then restore the CPU register information, which has also been saved in the storage unit.

Japanese Patent No. 4846553 (paragraphs 0038 to 0048, Figs. 5 and 6) discloses an information processing device that, upon receiving a suspension or hibernation request, terminates the application program it is currently running, then restarts the application and lets it proceed with initialization operations other than hardware initialization.

At this point the startup process is halted and the information processing device goes into suspension or hibernation. When the information processing device receives a request to recover from suspension or hibernation, it begins the requested recovery process, and when the recovery process is completed, it continues with the startup process to begin hardware initialization.

In the above disclosure, however, hardware initialization cannot start until the recovery process is completed, which lengthens the startup time. Moreover, the initial screen cannot be output until the recovery process is completed. Since the operating systems (OSs) installed in devices are increasing in size with every passing year, the necessary startup time is lengthening, and slow startup has become an increasingly serious problem.

### SUMMARY OF THE INVENTION

A resume method according to the invention is for starting an information processing device (1) having a volatile memory means (102), and a nonvolatile memory means (103) in which a first program runtime image (EM1), a second program runtime image (EM2), and an initial processing area list (AL) are stored, the first program runtime image (EM1) being a runtime image of a first operating system having functions necessary for normal operation of the information processing device (1), the second program runtime image (EM2) being a runtime image of a second operating system having functions for executing an initial process in the information processing device (1), and for reading the first program runtime image (EM1) from the nonvolatile memory means (103) and storing it in the volatile memory means (102), the resume method comprising the steps of:
reading the second program runtime image (EM2) from the nonvolatile memory means (103) when the information processing device (1) is powered on, and storing the second program runtime image (EM2) in the volatile memory means (102);
executing the initial process in the information processing device (1) by use of the second program runtime image (EM2) stored in the volatile memory means (102);
reading the first program runtime image (EM1) from the nonvolatile memory means (103) in parallel with the initial process, and storing the first program runtime image (EM1) in the volatile memory means (102); and
halting processing by the second program runtime image (EM2) and starting processing by the first program runtime image (EM1), when the initial process and the storing of the first program runtime image (EM1) have been completed; wherein
   said step of executing the initial process comprises the step of allocating an area in a first program area in the volatile memory means (102), based on address information included in the initial processing area list (AL), in response to a request for area allocation in the volatile memory means (102); and
   said step of reading the first program runtime image (EM1) from the nonvolatile memory means (103) and storing the first program runtime image (EM1) in the volatile memory means (102) comprises the step of
storing the first program runtime image (EM1) in an area other than the areas indicated by the address information included in the initial processing area list (AL), without storing the first program runtime image (EM1) in the areas indicated by the address information included in the initial processing area list (AL).

The second program is started in a short time by use of the second program runtime image, which is smaller in size than the first program runtime image. The initial process and the loading of the first program runtime image are then executed in parallel, so that the information processing device can start operating by means of its OS more quickly.
The first program and the second program can share an initial processing area in the volatile memory means, so that information from execution of the initial process by the second program can be passed efficiently to the first program.

### BRIEF DESCRIPTION OF THE DRAWINGS

In the attached drawings:
FIG. 1 is a block diagram illustrating an exemplary configuration of the information processing device in a first embodiment of the invention;
FIG. 2 is a flowchart illustrating an exemplary resume operation in the information processing device in the first embodiment;
FIG. 3 illustrates an exemplary deployment in the volatile memory means in FIG. 1;
FIG. 4 is a flowchart illustrating an exemplary procedure, carried out before the processing in FIG. 2, for obtaining the first program runtime image;
FIG. 5 is a flowchart illustrating an exemplary procedure, carried out before the processing in FIG. 2, for obtaining the second program runtime image;
FIG. 6 is a flowchart illustrating an exemplary process used in FIG. 2 to load the first program runtime image;
FIG. 7 is a flowchart illustrating an exemplary process, executed in the initial process in FIG. 4, for obtaining the initial processing area list;
FIG. 8 illustrates an exemplary allocation of areas in the volatile memory means in FIG. 1;
FIG. 9 is a table illustrating an exemplary initial processing area list;
FIG. 10 is an exemplary flowchart illustrating the allocation of an area according to the initial processing area list in the initial process in FIG. 2;
FIGs. 11A to 11C are exemplary timing diagrams illustrating the operation of the resume method in the first embodiment of the invention and the operation of conventional resume methods;
FIG. 12 is a block diagram illustrating an exemplary configuration of the information processing device in a second embodiment of the invention;
FIG. 13 is a flowchart illustrating an exemplary resume operation in the information processing device in the second embodiment; and
FIG. 14 is a flowchart illustrating an exemplary process used in FIG. 13 to load the first program runtime image.

### DETAILED DESCRIPTION OF THE INVENTION

### First Embodiment

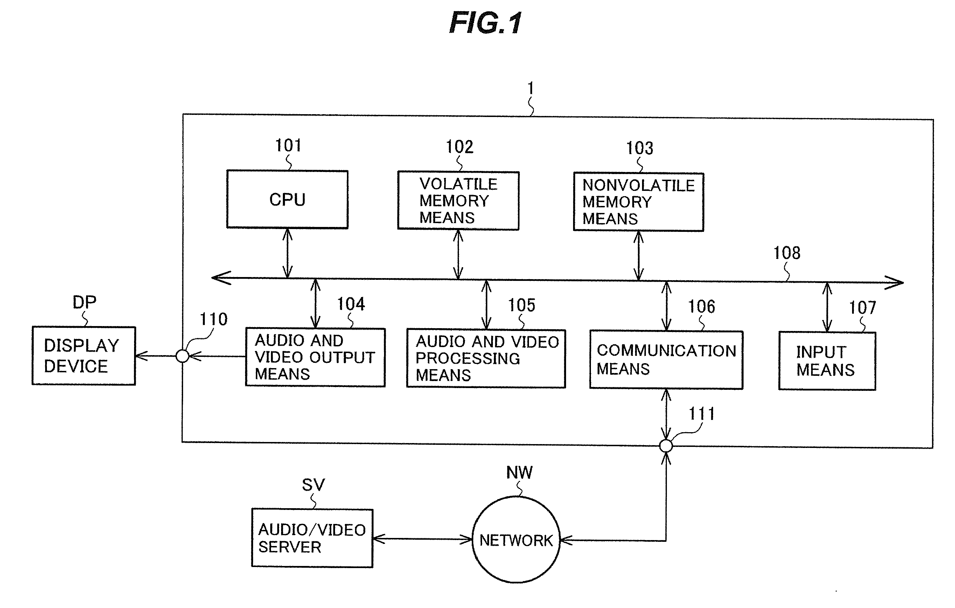

FIG. 1 shows an image processing device 1 of in first embodiment. The information processing device 1 in FIG. 1 is used to implement a resume method or startup method according to the invention.

The information processing device 1 is a device such as a set top box for receiving audio and video data distributed through a network NW from a communication carrier's audio/video server (distribution server) SV and outputting the data for reproduction by a display device DP, such as a television set or the monitor device of a personal computer (PC). The information processing device 1 selects distributed audio and video data in response to user input, and has the selected data to be displayed on the display device DP.

Referring to FIG. 1, the information processing device 1 includes a CPU 101, a volatile memory means 102, a nonvolatile memory means 103, an audio and video output means 104, an audio and video processing means 105, a communication means 106, an input means 107, a CPU bus 108, and terminals 110, 111.

The CPU 101 is a central processing unit that controls the entire information processing device 1. The CPU 101 may have a single-core or multi-core structure.

The volatile memory means 102 is a temporary memory means that the CPU 101 uses when executing processing. The volatile memory means 102 stores programs executed by the CPU 101 and stores temporary data generated during execution of the programs. The volatile memory means 102 is implemented as, for example, a semiconductor memory device such as a DRAM.

The nonvolatile memory means 103 is a nonvolatile memory means in which programs and data needed for the information processing device 1 to operate are retained even when no power is supplied. A hard disc drive (HDD), a solid state drive (SSD), an embedded multimedia card (eMMC), or the like may be used as the nonvolatile memory means 103.

Specifically, a first program PG1, a second program PG2, a first program runtime image EM1, and a second program runtime image EM2 are stored in the volatile memory means 102 and nonvolatile memory means 103.

The first program PG1 and second program PG2 are both operating systems. For example, the first program PG1 may be a Linux (registered trademark) OS, and the second program PG2 may be a Linux OS or an Android (registered trademark) OS.

The first program runtime image EM1 provides the OS functions needed by the information processing device 1 to receive audio and video data delivered from the communication carrier's audio/video server and output them to a display device such as a television set, or a PC monitor for display. That is, the first program runtime image EM1 provides the functions needed for normal operation of the information processing device 1.
The second program runtime image EM2 provides only the OS functions needed to carry out an initial process when the information processing device 1 starts up, such as functions for initializing hardware, outputting an initial screen, and initializing communication processes, and a function for reading the first program runtime image EM1 from the nonvolatile memory means 103 and storing it in the volatile memory means 102.
Accordingly, the second program runtime image EM2 can be smaller than the first program runtime image EM1, and can be started in a shorter time than the first program PG1.

The first program runtime image EM1 is acquired on the basis of the memory content (e.g., obtained by copying the memory content) in an area related to the first program PG1 in the volatile memory means 102, in a state in which the OS has been started in the information processing device 1.
The second program runtime image EM2 is acquired on the basis of the memory content (e.g., obtained by copying the memory content) the memory content in an area related to the second program PG2 in the volatile memory means 102, in the state in which the OS has been started in the information processing device 1.
For example, the manufacturer of the information processing device may obtain the first and second program runtime images EM1, EM2 and store them in the nonvolatile memory means 103 when the information processing device 1 is manufactured (before shipment). This would be suitable when the information processing device 1 is a set top box and the first and second programs PG1 and PG2 cannot be altered by the user.
The program for acquiring the first and second program runtime images EM1, EM2 is stored, at least while being executed, as a part of the first program PG1 in the information processing device 1. If the acquisition processes are carried out during the manufacture of the information processing device, the acquisition program may be deleted before shipment of the information processing device, or may be left in place.

In resuming or at startup, the second program runtime image EM2 is read from the nonvolatile memory means 103 and stored in the volatile memory means 102 to return the information processing device to the state when the second program runtime image EM2 was acquired. Then the first program runtime image EM1 is read from the nonvolatile memory means 103 and stored in the volatile memory means 102, and processing by the first program runtime image EM1 stored in the volatile memory means 102 begins.

The nonvolatile memory means 103 further includes an area in which an initial processing area list AL is stored.
Initial processing areas are set aside to record information used in an initial process carried out by the first program PG1, and the initial processing area list stores address information about the initial processing areas in the form of a list. The initial processing area list AL is generated during the process of acquiring the first program runtime image EM1, which will be described later.

The audio and video output means 104 is a means for outputting audio and video data from the terminal 110. The audio and video output means 104 includes a buffer for output of video data, a video interface circuit for output of the video data as a composite signal, a set of component signals, a high-definition multimedia interface (HDMI) signal, or another type of signal, and an audio interface circuit for output of audio data as an analog signal, optical digital signal, HDMI signal, or another type of signal. Although the audio and video interfaces are described as a single unit, they may be configured individually as separate circuit blocks. Separate terminals 110 may also be provided for output of audio and video signals.

The audio and video processing means 105 processes audio and video data. The audio and video processing means 105 carries out, for example, processes such as encoding, decoding, multiplexing, demultiplexing, encryption, and decryption of audio and video data, and may superimpose graphics onto video displays.

The audio and video processing means 105 receives audio and video data from the audio/video server SV through the network NW and the terminal 111. The network NW is, for example, an Ethernet (registered trademark) network.

The input means 107 receives commands from the user of the information processing device 1. The input means 107 may be, for example, a keyboard, a mouse, a touchpad, an infrared remote control, or a wireless remote control.

The operation of the information processing device 1 will now be described. The information processing device 1 reads programs and data stored in the nonvolatile memory means 103 and write them into the volatile memory means 102, where they are processed by the CPU 101. The programs stored in the nonvolatile memory means 103 include an operating system (OS) and application software that runs on the OS. Exemplary operating systems are the Linux OS and the Android OS.

The information processing device 1 receives commands entered by the user through the input means 107 and selects audio and video data to receive. Selection of the audio and video data to receive is performed by designation of a channel number and content data in the audio/video server SV.

The audio and video data distributed from the audio/video server SV are input at the terminal 111, received by the communication means 106, and stored in the volatile memory means 102 in the information processing device 1. The audio and video processing means 105 performs processes such as decryption, demultiplexing, video decoding, and audio decoding, on the audio and video data stored in the volatile memory means 102, and outputs the results to the audio and video output means 104.
The audio and video output means 104 outputs the decoded audio and video data received from the audio and video processing means 105 to the terminal 110 in the form of audio and video signals that can be reproduced as sound and pictures by a television set or a PC monitor.

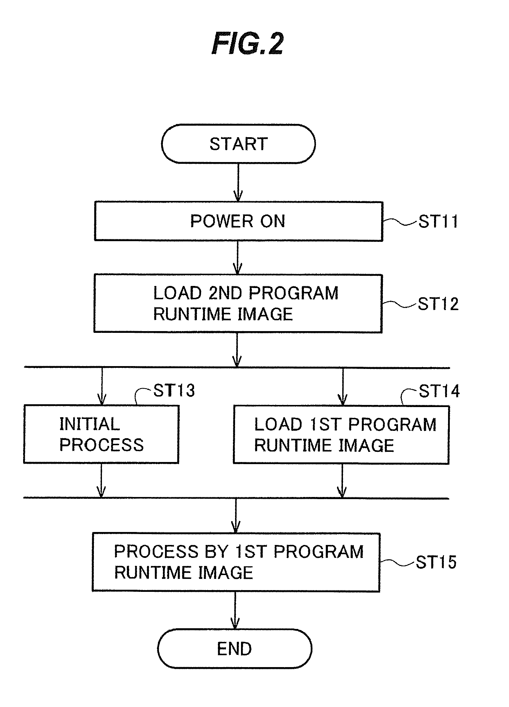

FIG. 2 shows an exemplary processing procedure for the resume function in this embodiment.
When the user of the information processing device 1 switches on the power of the information processing device (step ST11), the second program runtime image EM2 stored in the nonvolatile memory means 103 is read and stored in the volatile memory means 102 (step ST12).

Reading the second program runtime image EM2 from the nonvolatile memory means 103 and storing it in the volatile memory means 102 enables the information processing device to be returned to the state it was in when the second program runtime image EM2 was acquired. The time needed to start the second program PG2 can therefore be eliminated, and accordingly the information processing device 1 can start up faster.
If the manufacturer of the information processing device obtains the first and second program runtime images EM1, EM2 and stores them in the nonvolatile memory means 103 when the information processing device is manufactured (before shipment), a faster startup of the information processing device is possible even when the user starts it for the first time after obtaining (purchasing) it.

Next, an initial process is performed by the second program runtime image EM2 stored in the volatile memory means 102 (step ST13), and in parallel with this initial process (in step ST13), the first program runtime image EM1 stored in the nonvolatile memory means 103 is read and stored in the volatile memory means 102 (step ST14).
The initial process in step ST13 may include, for example, hardware initialization, display of an initial screen, communication process initialization, and so on. Communication process initialization establishes a connection with the audio/video server.

When the first program runtime image EM1 is read from the nonvolatile memory means 103 and stored in the volatile memory means 102, the information processing device can be returned to the state when the first program runtime image EM1 was acquired. This can eliminate the time needed to start the first program PG1, so that the information processing device can be started faster.

For example, the first program runtime image EM1 provides the OS functions necessary for the information processing device 1 to receive the audio and video data distributed from the audio/video server of the communication carrier and output the received data to a TV set, PC monitor, or other display device for display: in other words, all functions required for the normal operation of the information processing device 1.

The second program PG2 runtime image EM2 provides only the OS functions, such as hardware initialization, initial screen output, communication process initialization, and so on, that are needed in the initial process when the information processing device 1 is started up, and a function that reads the first program runtime image EM1 from the nonvolatile memory means 103 and stores it in the volatile memory means 102.

Accordingly, the second program runtime image EM2 can be smaller than the first program runtime image EM1, and can be started in a shorter time than the first program runtime image EM1.

The first program PG1 and second program PG2 may use the same OS, or each may use a different OS. Note that even when each program uses a different OS, the parts of the two programs that execute the initial process when the information processing device 1 is started must implement the same functions by the same procedures.

The read speed of the nonvolatile memory means 103 is slower than the write speed of the volatile memory means 102. If the nonvolatile memory means 103 is an embedded multimedia card (eMMC) with an 8-bit bus width and a clock frequency of 50 MHz, and the volatile memory means 102 is a double-data-rate-3 synchronous dynamic random access memory (DDR3-SDRAM) with an 8-bit bus width and a clock frequency of 800 MHz, for example, the read speed of the nonvolatile memory means 103 is about 50 Mbytes/second while the write speed of the volatile memory means 102 is about 400 Mbytes/second. The read speed of the nonvolatile memory means 103 is about an order or more of magnitude lower than the access speed of the volatile memory means 102, so that while the second program runtime image stored in the volatile memory means 102 is executing the initial process at a high speed, the first program runtime image can be read from the nonvolatile memory means 103 in the background and stored in the volatile memory means 102 at a lower speed. This enables efficient concurrent use of the volatile memory means 102, which is characterized by a fast access speed, and the nonvolatile memory means 103, which is characterized by a slow read speed.

Once the processing in steps ST13 and ST14 is completed, processing by the second program runtime image EM2 is stopped, and processing by the first program runtime image EM1 begins (step ST15). In step ST15, audio and video data to be reproduced are selected in response to a user command, and the audio and video data are received from the audio and video server, reproduced, and output as pictures and sound to a TV set or PC monitor.

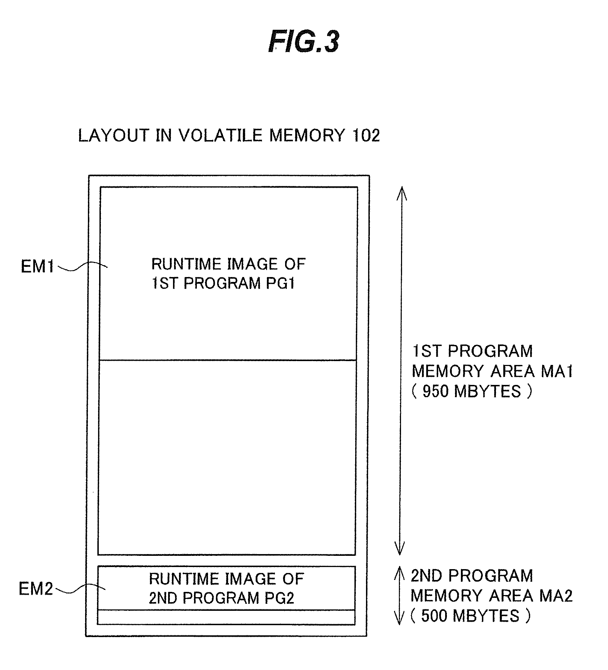

FIG. 3 schematically shows an exemplary deployment of the runtime image EM1 of the first program PG1 and the runtime image EM2 of the second program PG2 in the volatile memory means 102. In FIG. 3, each of the first program PG1 and the second program PG2 is an OS. For example, the first program PG1 is an Android OS and the second program PG2 is a Linux OS. The first program runtime image EM1 is stored in part of a first program memory area MA1 and the second program runtime image EM2 is stored in part of a second program memory area MA2.

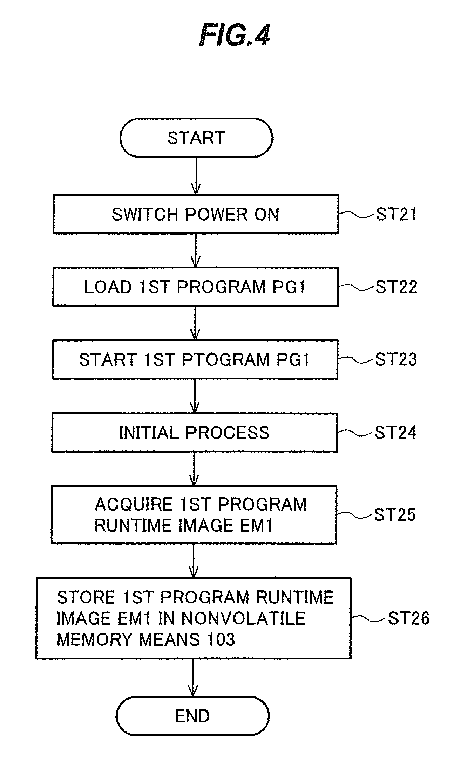

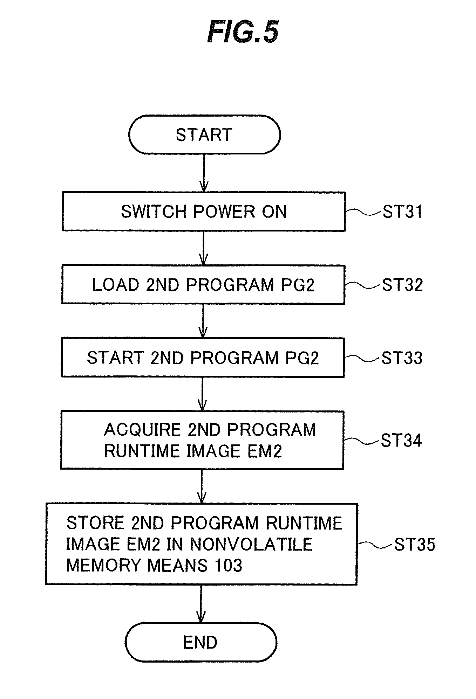

The first program runtime image EM1 and the second program runtime image EM2 are acquired by the processes shown in FIGs. 4 and 5 and stored in the nonvolatile memory means 103 in advance, that is, before the process in FIG. 2.

FIG. 4 shows an exemplary procedure for acquiring the first program runtime image EM1.

When the information processing device 1 is powered on (step ST21), the first program PG1, which is stored in the nonvolatile memory means 103, is read and stored in the volatile memory means 102 (step ST22).

Next, the first program PG1 stored in the volatile memory means 102 is started (step ST23) and the initial process is performed (step ST24). An allocation of areas in the volatile memory means 102 is performed in step ST24.

Then the first program runtime image EM1 is acquired (step ST25) and stored in the nonvolatile memory means 103 (step ST32).

FIG. 5 shows an exemplary procedure for acquiring the second program runtime image EM2.

The information processing device 1 is powered on (step ST31), and the second program PG2, which is stored in the nonvolatile memory means 103, is read and stored in the volatile memory means 102 (step ST32).

Next, the second program PG2 stored in the volatile memory means 102 is started (step ST33), and the second program runtime image EM2 is acquired (step ST34) and stored in the nonvolatile memory means 103 (step ST35).

When the CPU 101 has a single-core structure, it may carry out the processing in steps ST13 and ST14 concurrently by multitasking. When the CPU 101 has a multi-core structure, it may carry out steps ST13 and ST14 in separate CPU cores.

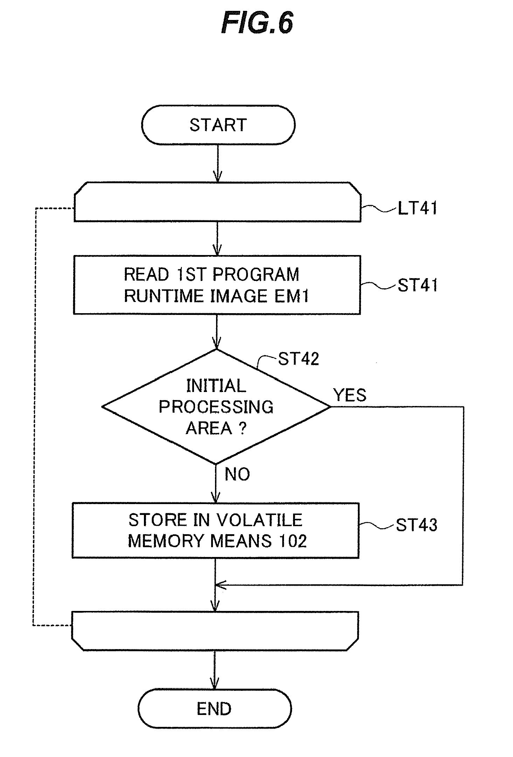

When the first program runtime image EM1 is loaded in step ST14, the first program runtime image EM1 stored in the nonvolatile memory means 103 is read and stored in the volatile memory means 102 by, for example, the flow of operations shown in FIG. 6.

Loop LT41 in FIG. 6 is an iterated process that stores the first program runtime image EM1 in the volatile memory means 102. As it stores the first program runtime image EM1 in the volatile memory means 102, loop LT41 changes the address.

In loop LT41, the first program runtime image EM1 is read address by address from the nonvolatile memory means 103 (step ST41), and each time, whether the storage destination address lies in one of the initial processing areas indicated in the initial processing area list AL is determined (step ST42). If so (Yes), the process returns to the beginning of the loop LT41. If not (No), the part is stored in the volatile memory means 102 (step ST43), and then the process returns to the beginning of the loop LT41.

The initial processing area list AL used in step ST42 in FIG. 6 is generated in, for example, the initial process in step ST24 in FIG. 4 of the procedure for acquiring the first program runtime image EM1. Each time a request for area allocation in the volatile memory means 102 is received, information indicating the specified area is added to the list, updating the list. The initial processing area list (initial processing area information) thus obtained is stored in the nonvolatile memory means 103.

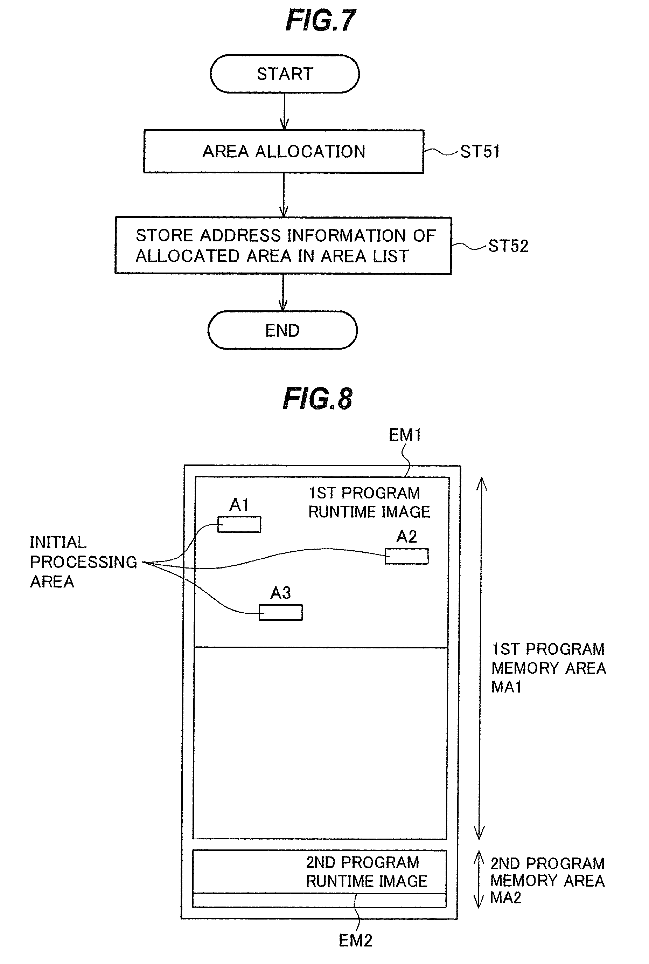

A request for area allocation in the volatile memory means 102 is made when the memory allocation function is invoked. The memory allocation function designates the size of an area to be allocated as an argument, and returns the initial address of the allocated area as a returned value. The initial processing area list AL can be acquired by programming the procedure shown in FIG. 7 into the memory allocation function.

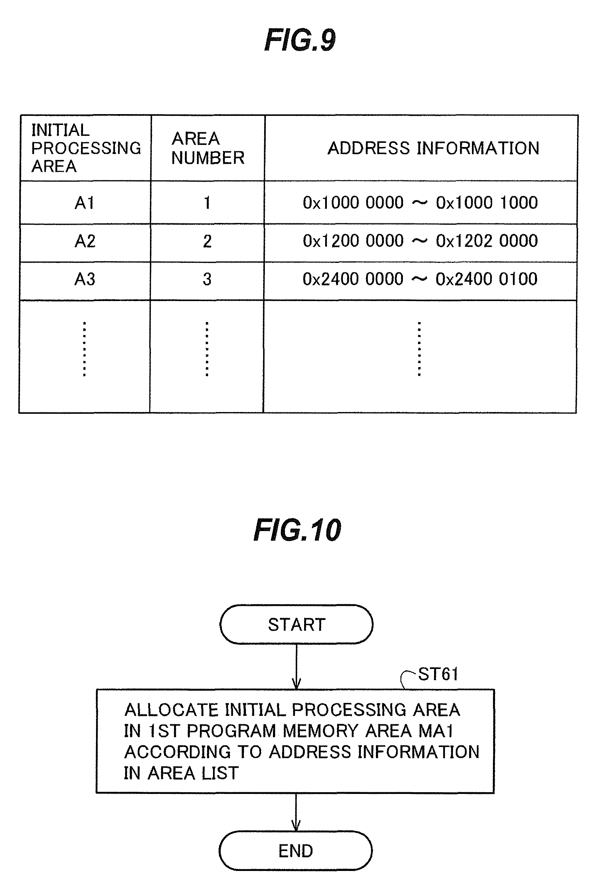

In the procedure shown in FIG. 7, a requested area allocation is performed in the memory area MA1 for the first program PG1 in the volatile memory means 102 (step ST51), address information indicating the allocated area is added to the initial processing area list AL (step ST52), and the allocation process ends.
The areas A1, A2, A3 in FIG. 8 are exemplary initial processing areas allocated within the memory area MA1 for the first program PG1. FIG. 9 shows an exemplary initial processing area list including the areas A1, A2, and A3 in FIG. 8.

When the initial process ST13 in FIG. 2 is performed, each time a request for area allocation in the volatile memory means 102 is made, the area is allocated through the process shown in FIG. 10.

In the process in FIG. 10, an area is allocated for the first program PG1 in the memory area MA1 in the volatile memory means 102, according to the address information listed in the initial processing area list AL stored in the nonvolatile memory means 103; that is, the requested one of the areas indicated by the address information is allocated (step ST61). Allocation is possible in this way because the initial process in the first program PG1 and the initial process in the second program PG2 both implement the same functions by the same procedures, so that the areas necessary for the initial process in the second program runtime image EM2 are included in the initial processing areas set aside in the process of acquiring the first program runtime image EM1.

If the process shown in FIG. 10 is programmed into the memory allocation function in the second program PG2, when initial processing memory areas are allocated for the second program PG2, they can be allocated in the memory area MA1 for the first program PG1 in the volatile memory means 102, instead of being allocated in the memory area MA2. The information obtained as a result of the initial process performed by the second program PG2 is then stored in the memory area MA1 for the first program PG1 in the volatile memory means 102.

As described above, when the first program runtime image EM1 is read from the nonvolatile memory means 103 and stored in the volatile memory means 102 in step ST14, it is not stored in the areas indicated by the initial processing area list AL. This enables the results obtained from the initial process performed by the second program PG2 to be kept and used later in the first program PG1 (i.e., in the processing in step ST15 in FIG. 2).

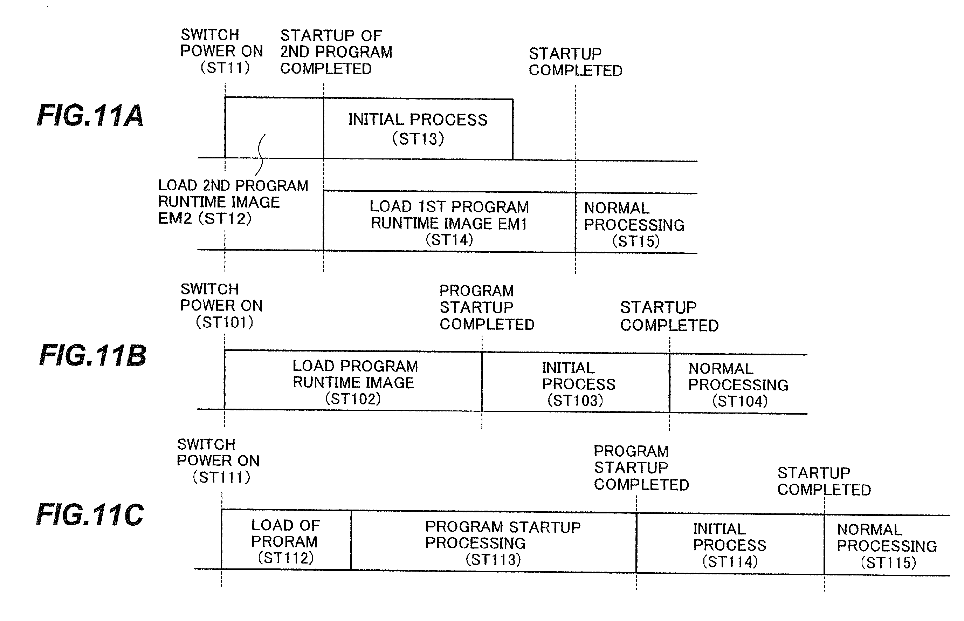

With the above configuration, as shown in FIG. 11A, responsive to the switching on of power in step ST11, loading (step ST12) of the second program runtime image EM2, which is smaller than the first program runtime image EM1, starts the second program PG2 in a short time, and the initial process (step ST13 and the loading (step ST14) of the first program runtime image EM1 are then performed in parallel, so that the information processing device 1 can be started up and begin operating on the OS faster.

For comparison, the processing when a conventional resume method is used in the information processing device in FIG. 1 is shown in FIG. 11B.

When the user switches on the power of the information processing device 1 (ST101), a program runtime image stored in the nonvolatile memory means 103 is read and stored into the volatile memory means 102 (ST102).

Here, the program is an OS, and the program runtime image corresponds to (e.g., a copy of) the data stored in the program-related areas in the volatile memory means 102 after the OS has been started in the information processing device 1.
By reading the program runtime image from the nonvolatile memory means 103 and storing it in the volatile memory means 102, the information processing device 1 can be returned to the state when the program runtime image was acquired.

Next, the initial process (ST103) is performed by the program runtime image stored in the volatile memory means 102. The initial process includes, for example, hardware initialization, display of an initial screen, communication process initialization, and connection with an audio and video server.

After these processes, the information processing device 1 is completely started up and shifts into its normal processing state (ST104). During normal processing, responsive to commands from the user, audio and video data to be reproduced are selected and received from the audio and video server SV, and the reproduced sound and pictures are output to a TV set or a PC monitor.

If no resume process is performed, then as shown in FIG. 11C, when the information processing device 1 is powered on (ST111), the program is loaded (ST112) and started (ST113), the initial process is carried out (ST114), and then normal processing (ST115) begins. Reading the program runtime image from the nonvolatile memory means 103 and storing it in the volatile memory means 102 as shown in FIG. 11B can eliminate the time needed to start the program, so that the information processing device 1 can start up faster.

However, the size of the runtime image of a Linux OS or an Android OS is increasing; the runtime image of an Android OS can be as large as about 200 Mbytes, for example. As noted above, the read speed of the nonvolatile memory means 103 is about an order or more of magnitude lower than the write speed of the volatile memory means 102.

Therefore, rather than the write speed of the volatile memory means 102, it is the read speed of the nonvolatile memory means 103 that significantly affects the amount of time needed for starting the information processing device 1. For example, if the read speed of the nonvolatile memory means 103 is about 50 Mbytes/second and the size of the runtime image is 200 Mbytes, then since 200 Mbytes/(50 Mbytes/second) = 4 seconds, it takes about four seconds to read the runtime image. This means that it takes four seconds from power-on until the runtime image has been read and the initial process can start.

In the above embodiment, as shown in FIG. 11A, the second program runtime image EM2 loaded in step ST12 to start the second program PG2 is smaller in size than the first program runtime image EM1, so that the second program PG2 starts in a short time, and since the initial process in step ST13 and the loading of the first program runtime image EM1 in step ST14 are performed in parallel, the information processing device 1 can start operating on its OS more quickly.

When the initial process ST13 includes hardware initialization, hardware initialization and the loading of the first program runtime image EM1 are performed in parallel, so that the apparent amount of time required for hardware initialization can be reduced.

When the initial process ST13 includes the display of an initial screen, the initial screen can be displayed at an early stage before the first program PG1 starts operating.

When the initial process ST13 includes communication process initialization, this initialization process can also be carried out at an early stage before the first program PG1 starts operating. If the information processing device 1 is a device that outputs audio and video data distributed from a server SV to a display device, it can establish a connection with the server SV at an early stage before the first program PG1 starts operating, and quickly acquire the parameters required for transfer of the audio and video data. This can reduce the amount of time from the start of the first program PG1 to the start of the distribution of the audio and video data. It is also possible to communicate with the audio and video server SV and acquire still image data before the start of the first program PG1, so that the display device can switch over to display of the server's user interface screen without delay following the startup of the first program PG1.

The first program PG1 and second program PG2 can share a common initial processing area in the volatile memory means 102, so that the information generated in the initial process ST13 executed by the second program PG2 can efficiently be passed to the first program PG1. This can also prevent inconsistency between the first program runtime image EM1 acquired beforehand and the result of the initial process ST13. For example, when the initial process ST13 includes the output of an initial screen image and the image is output via HDMI, the information processing device 1 and the TV set or PC monitor to which the video data are output must negotiate the display resolution and other information. If the negotiation result information acquired by the second program PG2 is not passed to the first program PG1, normal video data output may be lost at the transition of processing to the first program runtime image EM1. When the negotiation result information acquired by the second program PG2 can be passed to the first program PG1 by having the first and second programs PG1, PG2 share the same initial processing area in the volatile memory means 102, however, inconsistency between the first program runtime image EM1 acquired beforehand and the result of the initial process ST13 can be prevented, enabling normal video output.

### Second Embodiment

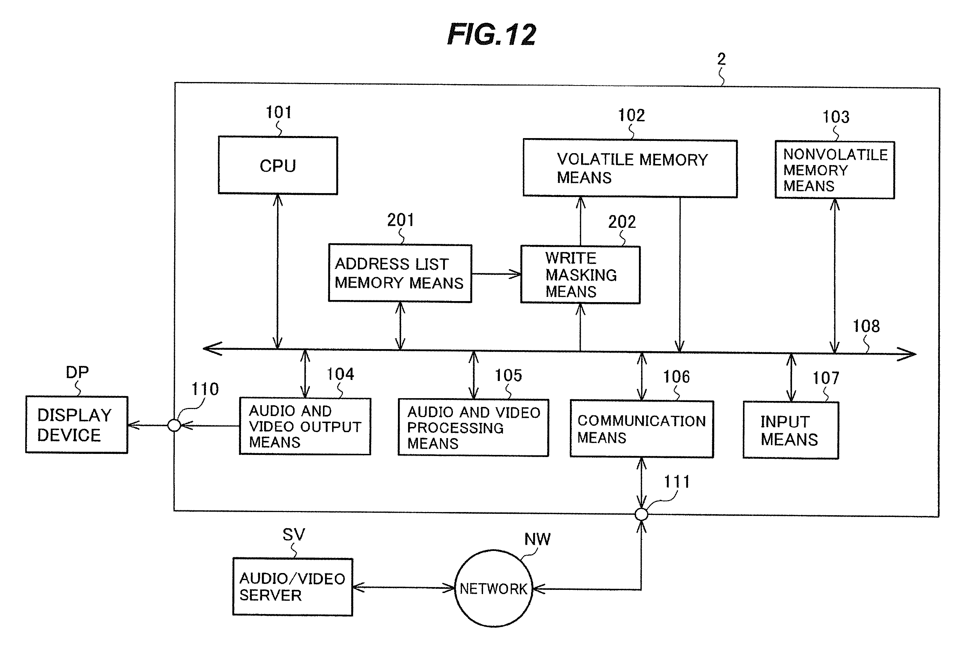

FIG. 12 shows an exemplary configuration of the information processing device 2 in the second embodiment. This information processing device 2 is generally the same as the information processing device in FIG. 1, but differs by the addition of an address list memory means 201 and a write masking means 202.

When the CPU 101 is powered on, it writes the initial processing address list AL into the address list memory means 201 as an address list.
The address list memory means 201 holds the address list written by the CPU 101.
The write masking means 202 disables writing into the areas indicated by the address information included in the address list held in the address list memory means 201, thereby preventing the information at these addresses in the volatile memory means 102 from being updated.

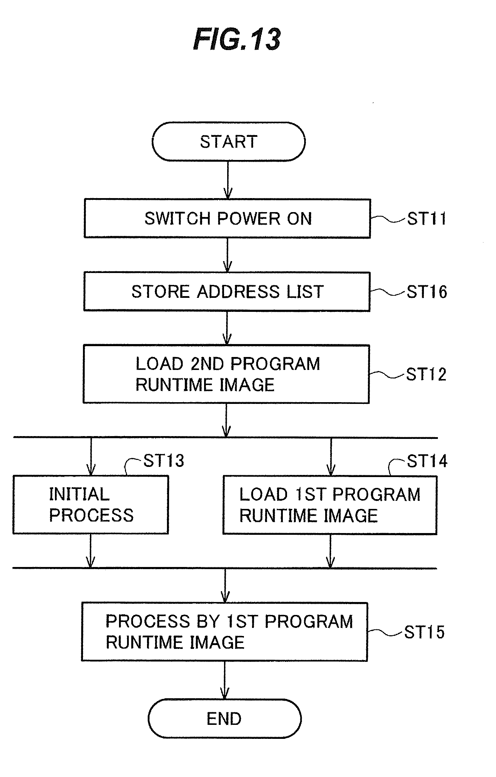

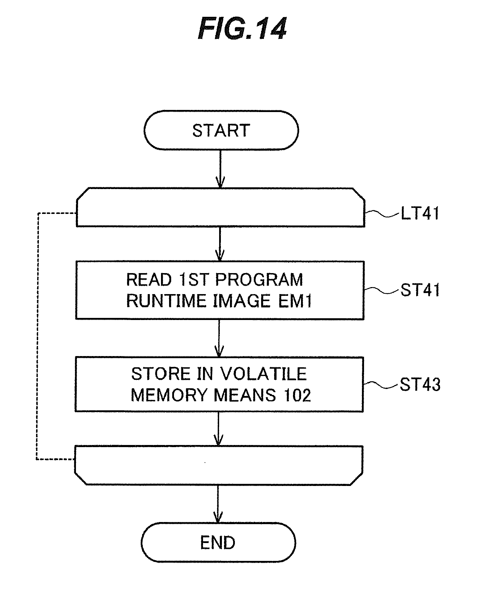

The second embodiment operates in the same way as the first embodiment. The processes in FIGs. 2 and 6, however, are replaced with the processes in FIGs. 13 and 14, respectively. The process in FIG. 13 is generally the same as the process in FIG. 2, but step ST16 is inserted between steps ST11 and ST12. In step ST16, the address information in the initial processing area list AL stored in the nonvolatile memory means 103 is read and stored in the address list memory means 201 as an address list.

The process in FIG. 14 is generally the same as the process in FIG. 6, but step ST42 in FIG. 6 is omitted; the process in step S43 is performed directly after step ST41. The determination as to whether or not to write in the volatile memory means 102 is performed by the write masking means 202. That is, writing into the areas indicated by the address information included in the address list is disabled, and the storage process in step ST43 is in effect not executed for areas indicated by this address information.
Step ST16 is added to have the address information in the initial processing area list AL read at power-on and stored in the address list memory means 201.

With the information processing device configured as shown in FIG. 12 and the process in FIG. 14 executed instead of the process in FIG. 6, the process in step S14 in FIG. 2 can be performed faster, and the information processing device 2 can start up even more quickly.

Those skilled in the art will recognize that further embodiments and variations are possible within the scope of the invention, which is defined in the appended claims.

## Claims

1. A resume method for starting an information processing device (1) having a volatile memory means (102), and a nonvolatile memory means (103) in which a first program runtime image (EM1), a second program runtime image (EM2), and an initial processing area list (AL) are stored, the first program runtime image (EM1) being a runtime image of a first operating system having functions necessary for normal operation of the information processing device (1), the second program runtime image (EM2) being a runtime image of a second operating system having functions for executing an initial process in the information processing device (1), and for reading the first program runtime image (EM1) from the nonvolatile memory means (103) and storing it in the volatile memory means (102), the resume method comprising the steps of:
reading the second program runtime image (EM2) from the nonvolatile memory means (103) when the information processing device (1) is powered on, and storing the second program runtime image (EM2) in the volatile memory means (102);
executing the initial process in the information processing device (1) by use of the second program runtime image (EM2) stored in the volatile memory means (102);
reading the first program runtime image (EM1) from the nonvolatile memory means (103) in parallel with the initial process, and storing the first program runtime image (EM1) in the volatile memory means (102); and
halting processing by the second program runtime image (EM2) and starting processing by the first program runtime image (EM1), when the initial process and the storing of the first program runtime image (EM1) have been completed; wherein
said step of executing the initial process comprises the step of allocating an area in a first program area in the volatile memory means (102), based on address information included in the initial processing area list (AL), in response to a request for area allocation in the volatile memory means (102); and
said step of reading the first program runtime image (EM1) from the nonvolatile memory means (103) and storing the first program runtime image (EM1) in the volatile memory means (102) comprises the step of
storing the first program runtime image (EM1) in an area other than the areas indicated by the address information included in the initial processing area list (AL), without storing the first program runtime image (EM1) in the areas indicated by the address information included in the initial processing area list (AL).

2. The resume method in claim 1, further comprising the steps of:
storing the first operating system in the volatile memory means (102);
starting the first operating system stored in the volatile memory means (102);
executing the initial process in the information processing device (1) by use of the first operating system thus started; and
reading the first program runtime image (EM1) from the volatile memory means (102), thereby obtaining the first program runtime image (EM1); wherein
said step of executing the initial process by use of the first operating system comprises the steps of
allocating the area, in response to the request for area allocation in the volatile memory means (102), in the first program area in the volatile memory means (102); and
adding address information about the allocated area to address information included in the initial processing area list (AL) and storing the initial processing area list (AL) in the nonvolatile memory means (103).

3. The resume method of claim 2, wherein the initial process executed in the information processing device (1) by use of the first operating system and the initial process executed in the information processing device (1) by use of the second program runtime image (EM2) implement mutually identical functions by mutually identical procedures.

4. The resume method of any one of claims 1 to 3, further comprising the steps of:
storing the second operating system in the volatile memory means (102);
starting the second operating system stored in the volatile memory means (102); and
reading the second program runtime image (EM2) from the volatile memory means (102), thereby acquiring the second program runtime image (EM2).

5. The resume method of any one of claims 1 to 4, wherein the initial process executed by use of the second program runtime image (EM2) includes hardware initialization.

6. The resume method of any one of claims 1 to 5, wherein the initial process executed by use of the second program runtime image (EM2) includes output of an initial screen.

7. The resume method of any one of claims 1 to 6, wherein the initial process executed by use of the second program runtime image (EM2) includes initialization of a communication process.

8. The resume method of claim 7, wherein:
the information processing device (1) outputs audio and video data distributed from a server (SV) to a display device (DP); and
initializing the communication process includes communicating with the server (SV), establishing a connection with the server, and acquiring parameters required for transfer of the audio and video data.

9. The resume method of claim 8, wherein the initial process executed in the information processing device (1) includes communicating with the server (SV) and acquiring still image data for display of a user interface screen.

10. The resume method of any one of claims 1 to 9, wherein the information processing device (2) includes an address list memory means (201) and a write masking means (202) and the resume method further comprises the steps of:
writing the initial processing area list (AL) in the address list memory means (201) as address information when the information processing device (2) is powered on; and
disabling writing into the areas indicated by the address information included in the address list written in the address list memory means (201) when the first program runtime image (EM1) is stored in the volatile memory means (102).

11. An information processing device (1), comprising:
a central processing unit (101);
a volatile memory means (102); and
a nonvolatile memory means (103) in which a first program runtime image (EM1), a second program runtime image (EM2), and an initial processing area list (AL) are stored; wherein
the first program runtime image (EM1) is a runtime image of a first operating system having functions necessary for normal operation of the information processing device (1);
the second program runtime image (EM2) is a runtime image of a second operating system having functions for executing an initial process in the information processing device (1) and for reading the first program runtime image (EM1) from the nonvolatile memory means (103) and storing it in the volatile memory means (102); and
the central processing unit (101)
reads the second program runtime image (EM2) from the nonvolatile memory means (103), and stores the second program runtime image (EM2) in the volatile memory means (102),
executes the initial process in the information processing device (1) by use of the second program runtime image (EM2) stored in the volatile memory means (102),
reads the first program runtime image (EM1) from the nonvolatile memory means (103) in parallel with the initial process, and stores the first program runtime image (EM1) in the volatile memory means (102), and
halts processing by the second program runtime image (EM2) and starts processing by the first program runtime image (EM1), when the initial process and the storing of the first program runtime image (EM1) have been completed; and wherein
the central processing unit (101) allocates, in response to requests for allocation of an area, an area in a first program area in the volatile memory means (102), based on address information included in the initial processing area list (AL), when the central processing unit (101)
executes the initial process by use of the second program runtime image (EM2); and
when reading the first program runtime image (EM1) from the nonvolatile memory means (103) and storing the first program runtime image (EM1) in the volatile memory means (102), the central processing unit (101) stores the first program runtime image (EM1) in an area other than the areas indicated by the address information included in the initial processing area list (AL), without storing the first program runtime image (EM1) in the areas indicated by the address information included in the initial processing area list (AL).

12. The information processing device (1) of claim 11, wherein the central processing unit (101):
stores the first operating system in the volatile memory means (102);
starts the first operating system stored in the volatile memory means (102);
executes the initial process in the information processing device (1) by use of the first operating system thus started; and
reads the first program runtime image (EM1) from the volatile memory means (102), thereby acquiring the first program runtime image (EM1); and
when executing the initial process by use of the first operating system,
in response to the request for area allocation in the volatile memory means (102), allocates the area in the first program area in the volatile memory means (102), and
adds address information about the allocated area to address information included in the initial processing area list (AL) and stores the initial processing area list (AL) in the nonvolatile memory means (103).

13. The information processing device (1) of claim 12, wherein the initial process executed in the information processing device (1) by use of the first operating system and the initial process executed in the information processing device (1) by use of the second program runtime image (EM2) implement mutually identical functions by mutually identical procedures.

14. The information processing device (1) of any one of claims 11 to 13, wherein the central processing unit (101):
stores the second operating system in the volatile memory means (102);
starts the second operating system stored in the volatile memory means (102); and
reads the second program runtime image (EM2) from the volatile memory means (102), thereby acquiring the second program runtime image (EM2).

15. The information processing device (1) of any one of claims 11 to 14, wherein the initial process executed by use of the second program runtime image (EM2) includes hardware initialization.

16. The information processing device (1) of any one of claims 11 to 15, wherein the initial process executed by use of the second program runtime image (EM2) includes output of an initial screen.

17. The information processing device (1) of any one of claims 11 to 16, wherein the initial process executed by use of the second program runtime image (EM2) includes initialization of a communication process.

18. The information processing device (1) of claim 17, wherein:
the information processing device (1) outputs audio and video data distributed from a server (SV) to a display device (DP); and
initializing the communication process includes communicating with the server (SV), establishing a connection with the server, and acquiring parameters required for transfer of the audio and video data.

19. The information processing device (1) of claim 18, wherein the initial process executed in the information processing device (1) includes communicating with the server (SV) and acquiring still image data for display of a user interface screen.

20. The information processing device (2) of any one of claims 11 to 19, further comprising:
an address list memory means (201); and
a write masking means (202); wherein
the central processing unit (101) writes the initial processing area list (AL) in the address list memory means (201) as address information when the information processing device (1) is powered on; and
the write masking means (202) disables writing into the areas indicated by the address information included in the address list written in the address list memory means (201) when the central processing unit (101) stores the first program runtime image (EM1) in the volatile memory means (102).
